# FASCICULE DE BREVET EUROPEEN

(11) **EP 4 643 086 B1**
(45) Date de publication et mention de la délivrance du brevet: **11.11.2026**
(21) Numéro de dépôt: 23838054.7
(22) Date de dépôt: 21.12.2023
(51) Int. Cl.: G01B 11/26, B29C 49/78, B29C 49/42

(54) **PROCÉDÉ POUR DÉTECTER LA POSITION ANGULAIRE D'UN CORPS CREUX PAR PRISE D'AU MOINS UNE IMAGE DU COL DUDIT CORPS CREUX ET DISPOSITIF POUR LA MISE EN OUVRE DUDIT PROCÉDÉ**
VERFAHREN ZUR ERFASSUNG DER WINKELPOSITION EINES HOHLKÖRPERS UNTER AUFNAHME MINDESTENS EINES BILDES DES HALSES DIESES HOHLKÖRPERS UND VORRICHTUNG ZUR DURCHFÜHRUNG DES VERFAHRENS
METHOD FOR DETECTING THE ANGULAR POSITION OF A HOLLOW BODY BY TAKING AT LEAST ONE IMAGE OF THE NECK OF SAID HOLLOW BODY, AND DEVICE FOR IMPLEMENTING SAID METHOD

(30) Priorité: 31.12.2022 FR 2214749
(43) Date de publication de la demande: 05.11.2025
(73) Titulaire: Sidel Participations, 76930 Octeville-sur-Mer (FR)
(72) Inventeur: BOURVELLEC, Loïc, 76930 OCTEVILLE-SUR-MER (FR); PASQUIER, Hervé, 76930 OCTEVILLE-SUR-MER (FR)
(74) Mandataire: Sidel Group
(86) Numéro de dépôt international: PCT/EP2023/087479
(87) Numéro de publication internationale: WO 2024/141433

(56) Documents cités:
- EP-B1- 2 934 771
- WO-A1-2021/130243
- US-A1- 2003 020 193

## Description

### Domaine technique

La présente invention concerne un procédé pour détecter l'orientation angulaire de corps creux en matériau thermoplastique, notamment de préformes et/ou de récipients, comportant un col d'axe principal déterminé qui est équipé d'au moins deux marques permettant de déterminer son orientation angulaire, ainsi qu'un dispositif pour la mise en œuvre du procédé suivant l'invention.

### Etat de la technique

Il est bien connu de réaliser des récipients en matériau thermoplastique par soufflage de préformes dont le corps est préalablement chauffé. Lesdites préformes présentent un col qui est déjà moulé à sa forme définitive et qui est donc destiné à demeurer inchangé durant la production du récipient.

La production en grande série de tels récipients es réalisée au moyen d'une station de soufflage qui est équipée de nombreux moules de soufflage. Le grand nombre de moules permet de produire les récipients à une cadence élevée, usuellement supérieure ou égale à 50000 bouteilles par heure. Les moules sont par exemple portés par un carrousel qui tourne de manière que les préformes soient soufflées les unes après les autres à grande cadence pendant leur déplacement entre un point d'introduction correspondant à l'introduction des préformes dans un moule associé, et un point de démoulage correspondant à l'éjection des récipients formés à l'extérieur des moules.

Les récipients ainsi obtenus sont réceptionnés à leur sortie de moule par des moyens de préhension d'une roue de transfert afin qu'ils soient acheminés à la file vers un autre dispositif via, par exemple, un convoyeur. La station suivante est par exemple une station de remplissage des récipients ou une station d'étiquetage ou de marquage des récipients.

Par ailleurs, il est parfois nécessaire de modifier l'orientation angulaire des préformes ou des récipients durant leur déplacement. Une telle modification de l'orientation angulaire est, par exemple, nécessaire lorsque les récipients présentent au moins un tronçon qui n'est pas axisymétrique par rapport à l'axe du col.

Pour obtenir de tels récipients non axisymétriques, les préformes sont généralement chauffées de manière préférentielle sur certaines parties, selon un procédé usuellement appelé « chauffe préférentielle ». Les préformes sont ensuites reçues dans des moules avec une orientation bien déterminées pour faire correspondre le profil de chauffe des corps avec l'empreinte du récipient non axisymétrique à obtenir.

En outre, les récipients non axisymétriques ainsi obtenus doivent être présentés avec une orientation bien définie dans un dispositif d'étiquetage aval afin qu'une étiquette soit appliquée sur une surface de réception réservée à cet effet sur le récipient non axisymétrique.

Une telle modification est aussi nécessaire dans d'autres configurations, par exemple sur certains récipients, axisymétriques ou non, qui sont destinés à être équipés de pistolets pulvérisateurs qui doivent être orientés correctement par rapport à une étiquette du récipient.

Les stations sont généralement elles-mêmes équipées de moyens de transport des récipients, tels que des carrousels. La modification de l'orientation angulaire du récipient peut aussi intervenir directement sur ces moyens de transport, et pas uniquement sur des moyens de transfert entre deux stations.

Afin de permettre la bonne orientation des préformes et/ou des récipients, il est connu d'équiper le col des préformes avec un repère qui permet de réaliser leur orientation angulaire autour de l'axe du col par rapport à un support. Le col conservant sa forme durant le procédé de réalisation du récipient, ce repère demeure utilisable pour permettre l'orientation du récipient fini autour de l'axe de son col. Un tel repère est par exemple formé par une encoche réalisée dans une collerette du col, ou encore par un ergot réalisé dans une gorge située à la base de la collerette.

Ce repère permet de déterminer l'orientation angulaire de la préforme ou du récipient par rapport à son support, et éventuellement de modifier l'orientation angulaire de la préforme ou du support pour amener le repère dans une position de référence déterminée par rapport au support.

Dans la suite de la description, on désignera par les termes « corps creux » indifféremment une préforme ou un récipient fini.

Pour connaître la position angulaire du repère par rapport au support du corps creux, on a déjà proposé d'utiliser un dispositif de capture d'images dont l'axe de prise de vue est confondu avec l'axe du col de la préforme. Le dispositif de capture d'images permet ainsi de prendre une unique image de la collerette afin de détecter un repère formé par une encoche réalisée dans le pourtour de la collerette.

Toutefois, un tel dispositif ne permet pas de voir un repère qui serait susceptible d'être cachés par d'autres éléments de la préforme sur l'image. Ainsi, l'image ne permet pas de voir un repère formé par un ergot situé dans une gorge réalisée dans une face du col parallèle à son axe.

En outre, certains récipients nécessitent l'utilisation de préformes dénuées de collerettes. Dans ce cas, la préforme est munie d'un bouchon portant une collerette amovible pour permettre sa manutention durant le procédé de réalisation du récipient final. Cependant, une telle collerette est susceptible de bouger par rapport au corps creux et ne peut donc pas servir à porter le repère. Le repère est alors nécessairement porté par une face du col parallèle à son axe. Un tel repère est difficilement détectable par le dispositif de l'état de la technique, voire complètement caché par la collerette qui risque d'être interposée entre le champ de vision du dispositif de capture d'images et le repère.

Par ailleurs, on connait les documents EP2439488, EP2439490 et FR3088112 qui décrivent des procédés et des dispositifs pour détecter la position angulaire d'un corps creux et d'une préforme en particulier.

Le document EP2439488 décrit un procédé et un dispositif d'acquisition optique de la position angulaire de filets de récipients en mouvement, tels que des préformes par exemple. Le procédé comprend une étape d'orientation définie d'un axe longitudinal des récipients par rapport à un dispositif de détection optique, positionné en dessous des récipients, au moyen d'un dispositif de positionnement, le dispositif de positionnement et une zone de couplage définie du récipient étant reliés l'un à l'autre, et une étape d'acquisition sans contact de valeurs de position ainsi que d'information concernant au moins la position angulaire pertinente d'au moins une partie filetée par rapport à au moins un point de référence orienté de manière définie et situé indépendamment de la position angulaire du récipient, au moins deux valeurs de position sensiblement espacées l'une de l'autre de parties filetés formées étant acquises et leurs écarts l'une par rapport à l'autre et/ou par rapport au point de référence étant identifiés, ledit point de référence étant une partie du récipient orientée de manière définie et/ou au moins un marquage défini formé dans la trajectoire du dispositif de détection dans la zone du dispositif de positionnement. Les données sont alors transmises à un dispositif de traitement permettant de produire des données concernant la position angulaire du récipient, en tenant compte d'une grandeur de référence définie et de deux valeurs de position.

Ce type de dispositif et de procédé présente l'inconvénient de n'être applicable qu'à des récipients dont le col comporte une partie filetée, ladite partie filetée étant apte à recevoir un bouchon. Or, de plus en plus de récipients ne comportent pas de partie filetée sur le col.

Le document EP2439490 décrit un dispositif et un procédé de reconnaissance d'une position de rotation de préformes en plastique. Ledit dispositif comporte un système de capture d'image, lequel capture une image à résolution spatiale du récipient en plastique, le système de capture d'image étant agencé de telle manière qu'il observe le récipient en plastique sensiblement le long de la direction longitudinale de ce dernier. Il comporte également un système d'éclairage qui éclaire au moins une zone du récipient en plastique observée par le système de capture d'image et un système d'évaluation qui détermine sur la base d'au moins une image capturée par le système de capture d'image une position angulaire du récipient par rapport à la longueur longitudinale de ce dernier, le système d'éclairage éclairant le récipient à partir d'au moins deux directions différentes afin d'éclairer l'intégralité d'une bague de support du récipient.

Toutefois, la position du système de capture d'image et du système d'éclairage rend ce type de dispositif particulièrement encombrant .

Le document FR3088112 décrit un procédé et un dispositif pour détecter l'orientation angulaire de corps creux en matériau thermoplastique, notamment de préformes, comportant un col d'axe principal déterminé qui est équipé d'un repère permettant de déterminer son orientation angulaire, le procédé comportant une première étape de prise d'au moins une image du col du corps creux au moyen d'au moins un dispositif de capture d'images depuis une position de prise de vue et dans un axe de prise de vue tous deux déterminés par rapport au corps creux, et une deuxième étape de traitement de l'au moins une image pour détecter la position angulaire du repère par rapport à l'axe de prise de vue de l'au moins un dispositif de capture d'images. L'étape de prise d'au moins une image consiste à prendre au moins deux images de la périphérie extérieure du col depuis des positions de prise de vue excentrées par rapport à l'axe principal du col, les positions de prise de vue étant réparties autour de l'axe principal du col de manière que l'ensemble des images fassent apparaître toute la périphérie extérieure du col.

Ce type de dispositif présente également l'inconvénient d'être encombrant et d'être onéreux compte tenu du nombre de dispositifs de capture d'image nécessaires pour la mise en œuvre du procédé.

Il existe donc un besoin de détermination de la position angulaire des préformes moins encombrant et moins onéreux notamment.

WO2021/130243A1 divulgue un procédé d'orientation angulaire de corps creux dans une installation de fabrication de récipients avec une méthode alternative pour déterminer la position angulaire du corps creux.

### Divulgation de l'invention

L'un des buts de l'invention est donc de remédier à ces inconvénients en proposant un procédé et un dispositif pour détecter l'orientation angulaire de corps creux de conception simple et peu onéreuse, présentant un faible encombrement en utilisant qu'un seul dispositif de capture d'images.

A cet effet, et conformément à l'invention, il est proposé un procédé pour détecter l'orientation angulaire de corps creux en matériau thermoplastique, notamment de préformes et/ou de récipients, comportant un col d'axe A principal vertical déterminé qui est équipé d'au moins un repère permettant de déterminer son orientation angulaire, ledit col comportant au moins une collerette et une gorge annulaire s'étendant au-dessus de ladite collerette, le procédé comportant au moins les étapes suivantes de :
- Prise d'au moins une image du col du corps creux au moyen d'un dispositif de capture d'images depuis une position de prise de vue et dans un axe de prise de vue tous deux déterminés par rapport au corps creux ;
- Traitement de ladite au moins une image pour détecter la position angulaire du repère par rapport à l'axe de prise de vue du dispositif de capture d'images ;
Ledit procédé étant remarquable en ce que l'étape de prise d'au moins une image consiste à prendre au moins une image de la périphérie extérieure du col depuis un dispositif de capture d'images positionné sur le côté du corps creux, à hauteur du col dudit corps creux, de telle sorte que l'axe de prise de vue du dispositif de captures d'images s'étende sensiblement perpendiculairement à l'axe principal du corps creux et en ce que chaque corps creux comporte au moins deux marques distinctes positionnées dans la gorge s'étendant au-dessus de la collerette du col dudit corps creux, lesdites marques étant positionnées dans la gorge de telle sorte qu'au moins une des marques soit dans le champ de vision dudit dispositif de capture d'images quelle que soit l'orientation angulaire du corps creux.

De préférence, la prise d'image de la périphérie extérieure du corps creux est réalisée de telle sorte que les deux bords latéraux de la gorge s'étendent au-dessus de la collerette du col dudit corps creux.

Par ailleurs, le procédé comporte une étape de traitement de l'image prise par le dispositif de capture d'images comprenant au moins une étape de détection de la position de chaque bord latéral de la gorge, une étape de détection de la position d'au moins une marque entre les bords latéraux de la gorge et une étape de détermination de la position angulaire du corps creux en fonction de la position de ladite marque par rapport aux deux bords latéraux de la gorge.

Selon une première variante d'exécution, le corps creux est transporté le long d'un trajet déterminé par rapport à un châssis fixe, le dispositif de capture d'images étant fixe par rapport audit châssis et les images étant prises lors du passage du corps creux en au moins un point déterminé du trajet.

Selon une seconde variante d'exécution, le corps creux est transporté le long d'un trajet déterminé par rapport à un châssis fixe, le dispositif de capture d'images étant déplacé conjointement avec le corps creux durant son transport.

De préférence, les marques positionnées dans la gorge s'étendant au-dessus de la collerette du col dudit corps creux sont formées par des caractères alphanumériques et/ou des symboles et/ou des représentations géométriques et/ou des pictogrammes et/ou des caractères unicode.

Lesdits symboles sont des symboles mathématiques et/ou monétaires et/ou typographiques.

De plus, les marques sont apposées au fond de la gorge s'étendant au-dessus de la collerette du col dudit corps creux par gravure laser ou par gravure mécanique ou par estampage à chaud ou par moulage.

Un autre objet de l'invention concerne un dispositif pour la mise en œuvre du procédé, ledit dispositif comportant au moins un support destiné à recevoir un corps creux, et monté mobile le long d'un trajet déterminé, et un dispositif de capture d'images agencé sur le côté du corps creux, à hauteur du col du corps creux, de telle sorte que l'axe de prise de vue du dispositif de captures d'images s'étende sensiblement perpendiculairement à l'axe principal du corps creux et soit coplanaire avec la gorge annulaire s'étendant au-dessus de la collerette du col dudit corps creux.

De manière avantageuse, ledit dispositif comporte au moins une source lumineuse apte à éclairer toute la périphérie du col et/ou tout ou partie de la gorge s'étendant au-dessus de la collerette du col dudit corps creux.

Selon une première variante d'exécution, ladite source lumineuse est une source lumineuse annulaire coaxiale à l'axe A du col du corps creux.

Selon une seconde variante d'exécution, ladite source lumineuse est une source lumineuse ponctuelle positionnée au-dessus du dispositif de capture d'images et orientée vers la gorge s'étendant au-dessus de la collerette du col dudit corps creux.

Par ailleurs, dans un autre mode de réalisation, le dispositif de capture d'images est mobile conjointement avec le support du corps creux.

Alternativement, le dispositif de capture d'images est solidaire d'un châssis fixe, ledit support du corps creux étant mobile par rapport audit châssis.

De plus, ledit dispositif comporte des moyens de traitement des images prises par le dispositif de capture d'images incluant au moins un algorithme de détection de la position de chaque bord latéral de la gorge s'étendant au-dessus de la collerette du col dudit corps creux, un algorithme de détection de la position d'au moins une marque entre les bords latéraux de ladite gorge et un algorithme de détermination de la position angulaire du corps creux en fonction de la position de ladite marque par rapport aux deux bords latéraux de la gorge.

### Brève description des dessins

D'autres avantages et caractéristiques ressortiront mieux de la description qui va suivre de plusieurs variantes d'exécution, données à titre d'exemples non limitatifs, du dispositif et du procédé pour détecter l'orientation angulaire de corps creux en matériau thermoplastique conformes à l'invention, en référence aux dessins annexés sur lesquels :
[Fig. 1] est une représentation schématique vue de dessus d'une installation pour la fabrication de récipients réalisée selon les enseignements de l'invention,
[Fig. 2] est une vue de côté d'un corps creux muni de marques pour sa position angulaire,
[Fig. 3] est une vue de détail de côté à plus grande échelle du col du corps creux de la figure 2 muni de marques permettant de détecter sa position angulaire,
[Fig. 4] est une vue de côté d'un ensemble de prise de vue pour la mise en oeuvre du procédé de l'invention pour la détection de l'orientation angulaire d'un corps creux qui comporte un unique dispositif de capture d'images,
[Fig. 5] est une vue de côté d'une variante d'exécution d'un ensemble de prise de vue pour la mise en oeuvre du procédé de l'invention pour la détection de l'orientation angulaire d'un corps creux,
[Fig. 6] est une photo d'une image capturée par le dispositif pour la détection de l'orientation angulaire d'un corps creux suivant l'invention.

### Mode de réalisation de l'invention

Dans la suite de la description du dispositif et du procédé pour détecter l'orientation angulaire de corps creux en matériau thermoplastique suivant l'invention, les mêmes références numériques désignent les mêmes éléments. Les différentes vues ne sont pas nécessairement tracées à l'échelle.

Par ailleurs, dans la suite de la description, les termes "haut", "bas", et les termes dérivés "haute", "basse", sont utilisés par souci de clarté en référence à l'orientation des figures sans que ceci n'ait une quelconque portée limitative.

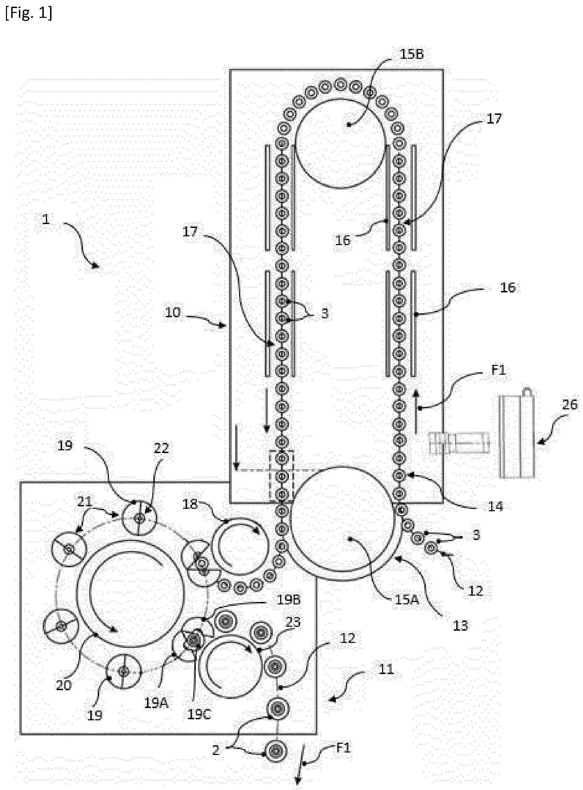

Sur la figure 1 est illustrée schématiquement une installation 1 pour la fabrication de récipients 2 à partir de préformes 3 en matière thermoplastique et plus particulièrement en PET (polyéthylène téréphtalate) ou en rPET (polyéthylène téréphtalate recyclé).

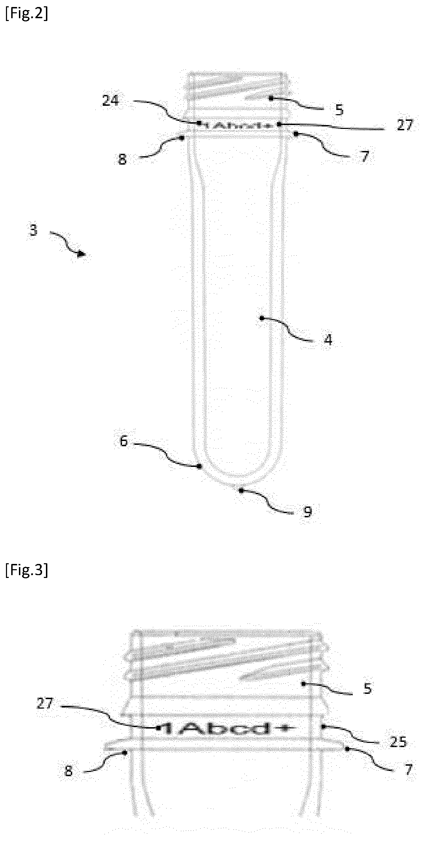

On a représenté à la figure 2 un corps creux, en l'espèce une préforme 3, qui est classiquement obtenu par moulage par injection. De manière générale, une telle préforme 3 comporte un corps 4 cylindrique d'axe « A ». Une extrémité supérieure du corps 4 débouche par un col 5 à la forme définitive de celui du récipient 2 à obtenir (qui en général ne subit pas la moindre déformation pendant la fabrication du récipient). Le corps 4 comporte un fond 6 qui ferme son extrémité inférieure et dont la forme est généralement hémisphérique. Le col 5 comporte une collerette 7 agencée à sa jonction avec le corps 4. La face inférieure de la collerette 7 est destinée à former une surface 8 d'appui pour permettre de soutenir la préforme 3 pendant son moulage, comme cela sera décrit par la suite.

A la fin de leur moulage par injection, les préformes 3 sont refroidies brutalement pour conférer au matériau thermoplastique un état amorphe. Il est ainsi possible de rendre le matériau thermoplastique à nouveau malléable par chauffage au delà d'une température de transition vitreuse.

Le fond 6 de la préforme 3 présente, au niveau de son intersection avec l'axe "A" du corps 4, un point 9 d'injection, correspondant au point d'injection du matériau thermoplastique pendant son moulage par injection.

En se reportant à nouveau à la figure 1, l'installation 1 de fabrication comprend une station de chauffage 10 et une station 11 de formage. Les préformes 3 se déplacent en file le long d'un trajet 12 de production qui passe à travers la station 10 de chauffage et la station 11 de formage. Le sens de déplacement des préformes 3 est indiqué par les flèches « F1 » de la figure 1. Lors du fonctionnement normal de l'installation 1 de fabrication, les préformes 3 sont en déplacement constant le long du trajet 12 de production.

La station de chauffage 10 a pour fonction de chauffer le corps 4 des préformes 3 à une température supérieure ou égale à la transition vitreuse du matériau constitutif, par exemple supérieure à 70°C lorsque ce matériau est du PET. La station de chauffage 10 comprend un convoyeur 13 (illustré schématiquement) pour transporter les préformes 3 en les faisant tourner sur elles-mêmes.

Le convoyeur 13 comporte généralement des mandrins 14 qui sont emboîtés avec le col 5 pour transporter les préformes 3. Les mandrins 14 se déplacent le long d'un circuit fermé. Les mandrins 14 sont par exemple portés par les maillons d'une chaîne ou encore par des navettes indépendantes se déplaçant le long d'un rail.

Le circuit comporte ici deux tronçons rectilignes parallèles reliés par des tronçons de virage à 180°. Le convoyeur 13 comporte en outre deux roues 15A, 15B de guidage des mandrins 14 dans les portions de virage du circuit fermé.

La station de chauffage 10 comporte aussi des moyens de chauffage 16 pour chauffer les préformes 3. Il s'agit par exemple de lampes faisant face à des réflecteurs ou de sources laser qui émettent un rayonnement électromagnétique dans le domaine des infrarouges. En variante non représentée de l'invention, les moyens de chauffage émettent un rayonnement électromagnétique dans le domaine des microondes.

Les moyens de chauffage 16 sont agencés le long d'une zone de chauffage 17 du trajet 12 de production des préformes. Dans l'exemple représenté à la figure 1, la station de chauffage 10 comporte une zone de chauffage 17 divisée en deux parties agencées en amont et en aval de la portion de virage guidée par la roue 15B de guidage.

Les préformes 3 entrent dans la station de chauffage 10, montées sur le convoyeur 13 sur lequel elles effectuent un tronçon en forme de U de leur trajet 12 de production passant à travers la zone de chauffage 17. Elles sont chauffées au défilé par les moyens de chauffage 16, lesquels, le cas échéant, sont placés d'un côté ou de part et d'autre des préformes 3 par rapport à leur sens de défilement. Les préformes 3 chaudes sont extraites de la station de chauffage 10 après leur passage dans la zone de chauffage 17 et transférées dans des moules de la station de formage 11 par un premier dispositif de transfert 18, tel qu'une roue de transfert, interposé entre la station de chauffage 10 et la station de formage 11.

Selon un exemple non limitatif de réalisation, les préformes 3 sont chauffées col 5 en haut. Il est bien évident que lesdites préformes 3 pourront être chauffées col 5 en bas et être retournées col 5 en haut entre leur sortie de la zone de chauffage 17 et avant leur sortie du convoyeur 13 sans pour autant sortir du cadre de l'invention.

La roue de transfert comprend des bras (non représentés, car connus en soi) qui viennent saisir successivement les préformes 3, à leur sortie de la station de chauffage 10, au niveau de leur col 5, pour les introduire chacune à leur tour dans un moule 19 de la station de formage 11. La station de formage 11 comprend un carrousel 20 tournant à la périphérie duquel sont disposés plusieurs postes de soufflage 21.

Chaque poste de soufflage 21 comprend au moins un moule 19 qui se compose usuellement de trois parties, soit deux demi-moules 19A, 19B et un fond de moule 19C, qui définissent une cavité 22 présentant l'empreinte du récipient 2.

Chaque préforme 3 chaude sortant de la station de chauffage 10 est introduite dans un moule 19 du poste de soufflage 21 pour y être soufflée et transformée en récipient 2. Une fois achevé, le récipient 2 est extrait du poste de soufflage 21 par un second dispositif de transfert 23, similaire au premier dispositif de transfert 18, et bien connu de l'homme du métier. La cavité 22 du moule 19 comporte un passage axial supérieur pour laisser le col 5 de la préforme 3 sortir de la cavité 22. Ainsi, le corps 4 est reçu dans la cavité 22 tandis que le col 5 demeure au dessus de la cavité 22, la préforme 3 étant maintenue en position par contact entre la surface d'appui 8 de sa collerette 7 avec le pourtour du passage. La position de la surface d'appui 8 de la collerette 7 constitue ainsi un point fixe invariant pour toute préforme 3 introduite dans un moule 19 associé.

Comme expliqué en préambule, dans certaines applications, il est nécessaire d'orienter la préforme et/ou le récipient final avant la réalisation d'un traitement. Par exemple, une préforme chauffée selon un profil de chauffe « préférentiel » devra être orientée en correspondance avec la forme de l'empreinte du moule dans le poste de formage.

A cet effet, en référence aux figures 2 à 6, l'invention concerne un procédé pour détecter l'orientation angulaire de préformes 3 (ou de tout autre corps creux en matériau thermoplastique) et/ou de récipients, comportant un col d'axe A principal vertical déterminé qui est équipé d'au moins un repère 24 permettant de déterminer son orientation angulaire, ledit col 5 comportant au moins une collerette 7 et une gorge annulaire 25 s'étendant au-dessus de ladite collerette. Ce repère 24 permet de déterminer l'orientation angulaire de la préforme 3 ou du récipient par rapport à son support, et éventuellement de modifier l'orientation angulaire de la préforme 3 ou du support pour amener le repère 24 dans une position de référence déterminée par rapport au support.

Ledit procédé comporte au moins les étapes suivantes de :
i) prise d'au moins une image du col 5 de la préforme 3 au moyen d'un dispositif de capture d'images 29 depuis une position de prise de vue et dans un axe de prise de vue tous deux déterminés par rapport au corps creux 3 ;
ii) traitement de ladite au moins une image pour détecter la position angulaire du repère 24 par rapport à l'axe de prise de vue du dispositif de capture d'images.

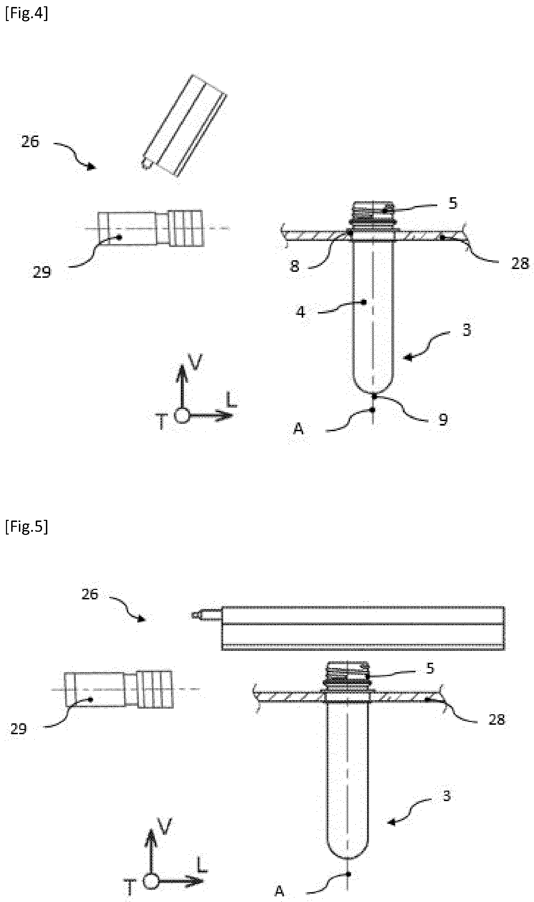

Selon une caractéristique essentielle du procédé, l'étape i) de de prise d'au moins une image consiste à prendre au moins une image de la périphérie extérieure du col 5 depuis un dispositif de capture d'images 25 positionné sur le côté de la préforme, à hauteur du col 5 de ladite préforme 3, de telle sorte que l'axe de prise de vue du dispositif de captures d'images 29 s'étende sensiblement perpendiculairement à l'axe principal A de la préforme 3 tel que représenté sur les figures 4 et 5.

En référence aux figures 2 et 3 notamment, chaque préforme 3 comporte au moins deux marques 27 distinctes positionnées dans la gorge 25 s'étendant au-dessus de la collerette 7 du col 5 de ladite préforme 3, lesdites marques 27 étant positionnées dans la gorge 25 de telle sorte qu'au moins une des marques 27 soit dans le champ de vision dudit dispositif de capture d'images 29 quelle que soit l'orientation angulaire de la préforme. Lesdites marques 27 positionnées dans la gorge 25 s'étendant au-dessus de la collerette 7 du col 5 de ladite préforme 3 sont formées par des caractères alphanumériques et/ou des symboles et/ou des représentations géométriques et/ou des pictogrammes et/ou des caractères unicode. Lesdits symboles sont, par exemple, des symboles mathématiques, tels que le symbole de l'addition + par exemple, et/ou monétaires et/ou typographiques, etc.

On observera que les marques 27 sont apposées au fond de la gorge 25 s'étendant au-dessus de la collerette 7 du col 5 de ladite préforme 3 par gravure laser ou par gravure mécanique ou par estampage à chaud ou par moulage ou par tout autre procédé bien connu de l'Homme du Métier.

De préférence, la prise d'image de la périphérie extérieure de la préforme 3 est réalisée de telle sorte que les deux bords latéraux de la gorge 25 s'étendent au-dessus de la collerette 7 du col 5 de ladite préforme 3. Pour ce faire, le dispositif de capture d'images 29 est positionné au droit de la gorge 25 de la préforme et à une distance appropriée pour que les bords latéraux de la gorge 25 soit dans le champ de prise de vue du dispositif de capture d'images.

Par ailleurs, le procédé comporte une étape de traitement de l'image prise par le dispositif de capture d'images 29 comprenant au moins une étape de détection de la position de chaque bord latéral de la gorge 25 de la préforme 3, une étape de détection de la position d'au moins une marque 27 entre les bords latéraux de la gorge 25 et une étape de détermination de la position angulaire de la préforme 3 en fonction de la position de ladite marque 27 par rapport aux deux bords latéraux de la gorge 25.

Selon une première variante d'exécution, telle que représentée sur la figure 1, la préforme 3 est transportée le long d'un trajet déterminé par rapport à un châssis fixe, le dispositif de capture d'images 29 étant fixe par rapport audit châssis et les images étant prises lors du passage de la préforme 3 en au moins un point déterminé dudit trajet.

Selon une seconde variante d'exécution, non représentée sur les figures, la préforme 3 est transportée le long d'un trajet déterminé par rapport à un châssis fixe, le dispositif de capture d'images 29 étant alors déplacé conjointement avec la préforme 3 durant son transport.

En référence aux figures 1 et 4, le dispositif pour la mise en œuvre du procédé suivant l'invention comporte un support 28 destiné à recevoir une préforme 3 (ou un corps creux), et monté mobile le long d'un trajet déterminé, en l'espèce le trajet 12 de l'installation 1 de fabrication, et un dispositif de capture d'images 29 agencé sur le côté de la préforme 3, à hauteur du col 5 de la préforme, de telle sorte que l'axe de prise de vue du dispositif de captures d'images 29 s'étende sensiblement perpendiculairement à l'axe principal de la préforme 3 et soit coplanaire avec la gorge annulaire 25 s'étendant au-dessus de la collerette 7 du col 5 de ladite préforme 3. De manière avantageuse, ledit dispositif comporte au moins une source lumineuse 26 apte à éclairer toute la périphérie du col 5 et/ou tout ou partie de la gorge 25 s'étendant au-dessus de la collerette 7 du col 5 de ladite préforme 3. Dans cet exemple particulier de réalisation, ladite source lumineuse 26 est une source lumineuse ponctuelle positionnée au-dessus du dispositif de capture d'images 29 et orientée vers la gorge 25 s'étendant au-dessus de la collerette 7 du col 5 de ladite préforme 3.

Selon une variante d'exécution, en référence à la figure 5, ladite source lumineuse 26 est une source lumineuse annulaire coaxiale à l'axe A du col 5 de la préforme 3.

Accessoirement, le dispositif de capture d'images 29 pourra être soit mobile conjointement avec le support du corps creux soit solidaire d'un châssis fixe, ledit support du corps creux étant mobile par rapport audit châssis.

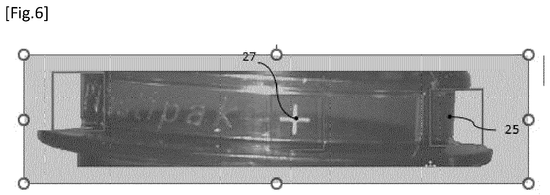

De plus, en référence à la figure 6, ledit dispositif comporte des moyens de traitement des images prises par le dispositif de capture d'images 29 incluant au moins un algorithme de détection de la position de chaque bord latéral de la gorge 25 s'étendant au-dessus de la collerette 7 du col 5 dudit corps creux, un algorithme de détection de la position d'au moins une marque 27 entre les bords latéraux de ladite gorge 25 et un algorithme de détermination de la position angulaire du corps creux en fonction de la position de ladite marque 27 par rapport aux deux bords latéraux de la gorge 25.

Enfin, il est bien évident que les exemples que l'on vient de donner ne sont que des illustrations particulières en aucun cas limitatives quant aux domaines d'application de l'invention. La portée de l'invention est définie par les revendications.

## Revendications

1. Procédé pour détecter l'orientation angulaire de corps creux (3) en matériau thermoplastique, notamment de préformes et/ou de récipients, comportant un col (5) d'axe A principal vertical déterminé qui est équipé d'au moins un repère (24) permettant de déterminer son orientation angulaire, ledit col (5) comportant au moins une collerette (7) et une gorge annulaire (25) s'étendant au-dessus de ladite collerette (7), le procédé comportant au moins les étapes suivantes de :
- Prise d'au moins une image du col (5) du corps creux (3) au moyen d'un dispositif de capture d'images (29) depuis une position de prise de vue et dans un axe de prise de vue tous deux déterminés par rapport au corps creux (3) ;
- Traitement de ladite au moins une image pour détecter la position angulaire du repère (24) par rapport à l'axe de prise de vue du dispositif de capture d'images (29) ;
- l'étape de prise d'au moins une image consistant à prendre au moins une image de la périphérie extérieure du col (5) depuis un dispositif de capture d'images (26) positionné sur le côté du corps creux (3), à hauteur du col (5) dudit corps creux (3), de telle sorte que l'axe de prise de vue du dispositif de captures d'images (29) s'étende sensiblement perpendiculairement à l'axe principal du corps creux (3) chaque corps creux (3) comportant au moins deux marques (24) distinctes positionnées dans la gorge (25) s'étendant au-dessus de la collerette (7) du col (5) dudit corps creux (3), lesdites marques (24) étant positionnées dans la gorge (25) de telle sorte qu'au moins une des marques (24) soit dans le champ de vision dudit dispositif de capture d'images (29) quelle que soit l'orientation angulaire du corps creux (3) ; le procédé **caractérisé en ce qu'**il comporte
- une étape de traitement de l'image prise par le dispositif de capture d'images (29) comprenant au moins une étape de détection de la position de chaque bord latéral de la gorge (25), une étape de détection de la position d'au moins une marque (24) entre les bords latéraux de la gorge (25) et une étape de détermination de la position angulaire du corps creux (3) en fonction de la position de ladite marque (24) par rapport aux deux bords latéraux de la gorge (25).

2. Procédé suivant la revendication 1 **caractérisé en ce que** la prise d'image de la périphérie extérieure du corps creux est réalisée de telle sorte que les deux bords latéraux de la gorge (25) s'étendent au-dessus de la collerette (7) du col (5) dudit corps creux (3).

3. Procédé suivant la revendication 1 ou 2, **caractérisé en ce que** le corps creux (3) est transporté le long d'un trajet (12) déterminé par rapport à un châssis fixe, le dispositif de capture d'images (29) étant fixe par rapport audit châssis et les images étant prises lors du passage du corps creux (3) en au moins un point déterminé du trajet (12).

4. Procédé suivant la revendication 1 ou 2, **caractérisé en ce que** le corps creux (3) est transporté le long d'un trajet (12) déterminé par rapport à un châssis fixe, le dispositif de capture d'images (29) étant déplacé conjointement avec le corps creux (3) durant son transport.

5. Procédé suivant l'une quelconque des revendications 1 à 4 **caractérisé en ce que** les marques (24) positionnées dans la gorge (25) s'étendant au-dessus de la collerette (7) du col (5) dudit corps creux (3) sont formées par des caractères alphanumériques et/ou des symboles et/ou des représentations géométriques et/ou des pictogrammes et/ou des caractères unicode.

6. Procédé suivant la revendication 5 **caractérisé en ce que** les symboles sont des symboles mathématiques et/ou monétaires et/ou typographiques.

7. Procédé suivant l'une quelconque des revendications 1 à 6 **caractérisé en ce que** les marques (24) sont apposées au fond de la gorge (25) s'étendant au-dessus de la collerette (7) du col (5) dudit corps creux (3) par gravure laser ou par gravure mécanique ou par estampage à chaud ou par moulage.

8. Dispositif pour la mise en œuvre du procédé réalisé suivant l'une quelconque des revendications précédentes, comportant au moins un support (28) destiné à recevoir un corps creux (3), et monté mobile le long d'un trajet (12) déterminé, et un dispositif de capture d'images (29) agencé sur le côté du corps creux (3), à hauteur du col (5) du corps creux (3), de telle sorte que l'axe de prise de vue du dispositif de captures d'images (29) s'étende sensiblement perpendiculairement à l'axe principal du corps creux (3) et soit coplanaire avec la gorge annulaire (25) s'étendant au-dessus de la collerette (7) du col (5) dudit corps creux (3), dispositif **caractérisé en ce qu'**il comporte des moyens de traitement des images prises par le dispositif de capture d'images (29) incluant au moins un algorithme de détection de la position de chaque bord latéral de la gorge (25) s'étendant au-dessus de la collerette (7) du col (5) dudit corps creux (3), un algorithme de détection de la position d'au moins une marque (24) entre les bords latéraux de ladite gorge (25) et un algorithme de détermination de la position angulaire du corps creux (3) en fonction de la position de ladite marque (24) par rapport aux deux bords latéraux de la gorge (25).

9. Dispositif suivant la revendication 8 **caractérisé en ce qu'**il comporte au moins une source lumineuse (26) apte à éclairer toute la périphérie du col (5) et/ou tout ou partie de la gorge (25) s'étendant au-dessus de la collerette (7) du col (5) dudit corps creux (3).

10. Dispositif suivant la revendication 8 **caractérisé en ce que** ladite source lumineuse (26) est une source lumineuse annulaire coaxiale à l'axe A du col (5) du corps creux (3).

11. Dispositif suivant la revendication 8 **caractérisé en ce que** ladite source lumineuse (26) est une source lumineuse ponctuelle positionnée au-dessus du dispositif de capture d'images (29) et orientée vers la gorge (25) s'étendant au-dessus de la collerette (7) du col (5) dudit corps creux (3).

12. Dispositif suivant l'une quelconque des revendications 8 à 11 **caractérisé en ce que** le dispositif de capture d'images (29) est mobile conjointement avec le support (28) du corps creux (3).

13. Dispositif suivant l'une quelconque des revendications 8 à 11 **caractérisé en ce que** le dispositif de capture d'images (29) est solidaire d'un châssis fixe, ledit support (28) du corps creux (3) étant mobile par rapport audit châssis.

## Patentansprüche

1. Verfahren zur Detektion der Winkelorientierung von Hohlkörpern (3) aus thermoplastischem Material, insbesondere von Vorformlingen und/oder von Behältern, die einen Hals (5) mit einer bestimmten vertikalen Hauptachse A umfassen, der mit mindestens einer Markierung (24) ausgestattet ist, die es ermöglicht, seine Winkelorientierung zu bestimmen, wobei der Hals (5) mindestens einen Stützring (7) und eine ringförmige Nut (25), die sich über dem Stützring (7) erstreckt, umfasst, wobei das Verfahren mindestens die folgenden Schritte umfasst:
- Aufnehmen mindestens eines Bildes des Halses (5) des Hohlkörpers (3) mittels einer Bilderfassungsvorrichtung (29) von einer Aufnahmeposition aus und in einer Aufnahmeachse, die beide in Bezug auf den Hohlkörper (3) bestimmt werden;
- Verarbeiten des mindestens einen Bildes, um die Winkelposition der Markierung (24) in Bezug auf die Aufnahmeachse der Bilderfassungsvorrichtung (29) zu detektieren;
- wobei der Schritt des Aufnehmens mindestens eines Bildes darin besteht, mindestens ein Bild des Außenumfangs des Halses (5) von einer Bilderfassungsvorrichtung (26) aus aufzunehmen, die auf der Seite des Hohlkörpers (3) auf Höhe des Halses (5) des Hohlkörpers (3) positioniert ist, so dass sich die Aufnahmeachse der Bilderfassungsvorrichtung (29) im Wesentlichen senkrecht zur Hauptachse des Hohlkörpers (3) erstreckt, wobei jeder Hohlkörper (3) mindestens zwei verschiedene Marken (24) umfasst, die in der sich über dem Stützring (7) des Halses (5) des Hohlkörpers (3) erstreckenden Nut (25) positioniert sind, wobei die Marken (24) in der Nut (25) so positioniert sind, dass sich mindestens eine der Marken (24) unabhängig von der Winkelorientierung des Hohlkörpers (3) im Sichtfeld der Bilderfassungsvorrichtung (29) befindet;
wobei das Verfahren **dadurch gekennzeichnet ist, dass** es umfasst
- einen Schritt des Verarbeitens des von der Bilderfassungsvorrichtung (29) aufgenommenen Bildes, der mindestens einen Schritt des Detektierens der Position jeder seitlichen Kante der Nut (25), einen Schritt des Detektierens der Position mindestens einer Marke (24) zwischen den seitlichen Kanten der Nut (25) und einen Schritt des Bestimmens der Winkelposition des Hohlkörpers (3) in Abhängigkeit von der Position der Marke (24) in Bezug auf die beiden seitlichen Kanten der Nut (25) umfasst.

2. Verfahren nach Anspruch 1, **dadurch gekennzeichnet, dass** das Aufnehmen eines Bildes des Außenumfangs des Hohlkörpers so ausgeführt wird, dass sich die beiden seitlichen Kanten der Nut (25) über dem Stützring (7) des Halses (5) des Hohlkörpers (3) erstrecken.

3. Verfahren nach Anspruch 1 oder 2, **dadurch gekennzeichnet, dass** der Hohlkörper (3) entlang einer bestimmten Bahn (12) in Bezug auf ein ortsfestes Gestell transportiert wird, wobei die Bilderfassungsvorrichtung (29) in Bezug auf das Gestell ortsfest ist und die Bilder während des Vorbeilaufens des Hohlkörpers (3) an mindestens einer bestimmten Stelle der Bahn (12) aufgenommen werden.

4. Verfahren nach Anspruch 1 oder 2, **dadurch gekennzeichnet, dass** der Hohlkörper (3) entlang einer bestimmten Bahn (12) in Bezug auf ein ortsfestes Gestell transportiert wird, wobei die Bilderfassungseinrichtung (29) während seines Transports zusammen mit dem Hohlkörper (3) bewegt wird.

5. Verfahren nach einem der Ansprüche 1 bis 4, **dadurch gekennzeichnet, dass** die Marken (24), die in der sich über dem Stützring (7) des Halses (5) des Hohlkörpers (3) erstreckenden Nut (25) positioniert sind, durch alphanumerische Zeichen und/oder Symbole und/oder geometrische Darstellungen und/oder Piktogramme gebildet werden und/oder Unicode-Zeichen gebildet werden.

6. Verfahren nach Anspruch 5, **dadurch gekennzeichnet, dass** die Symbole mathematische und/oder monetäre und/oder typographische Symbole sind.

7. Verfahren nach einem der Ansprüche 1 bis 6, **dadurch gekennzeichnet, dass** die Marken (24) auf dem Boden der sich über dem Stützring (7) des Halses (5) des Hohlkörpers (3) erstreckenden Nut (25) durch Lasergravur oder durch mechanische Gravur oder durch Heißprägen oder durch Anformen angebracht werden.

8. Vorrichtung zur Durchführung des Verfahrens nach einem der vorhergehenden Ansprüche, umfassend mindestens einen Träger (28), der dazu bestimmt ist, einen Hohlkörper (3) aufzunehmen, und entlang einer bestimmten Bahn (12) beweglich montiert ist, und eine Bilderfassungsvorrichtung (29), die auf der Seite des Hohlkörpers (3) auf Höhe des Halses (5) des Hohlkörpers (3) angeordnet ist, so dass sich die Aufnahmeachse der Bilderfassungsvorrichtung (29) im Wesentlichen senkrecht zur Hauptachse des Hohlkörpers (3) erstreckt und komplanar mit der ringförmigen Nut (25) ist, die sich über dem Stützring (7) des Halses (5) des Hohlkörpers (3) erstreckt, wobei die Vorrichtung **dadurch gekennzeichnet ist, dass** sie Mittel zum Verarbeiten der von der Bilderfassungsvorrichtung (29) aufgenommenen Bilder umfasst, die mindestens einen Algorithmus zur Detektion der Position jeder seitlichen Kante der sich über dem Stützring (7) des Halses (5) des Hohlkörpers (3) erstreckenden Nut (25), einen Algorithmus zur Detektion der Position mindestens einer Marke (24) zwischen den seitlichen Kanten der Nut (25) und einen Algorithmus zur Bestimmung der Winkelposition des Hohlkörpers (3) in Abhängigkeit von der Position der Marke (24) in Bezug auf die beiden seitlichen Kanten der Nut (25) beinhalten.

9. Vorrichtung nach Anspruch 8, **dadurch gekennzeichnet, dass** sie mindestens eine Lichtquelle (26) umfasst, die in der Lage ist, den gesamten Umfang des Halses (5) und/oder die gesamte oder einen Teil der sich über dem Stützring (7) des Halses (5) des Hohlkörpers (3) erstreckenden Nut (25) zu beleuchten.

10. Vorrichtung nach Anspruch 8, **dadurch gekennzeichnet, dass** die Lichtquelle (26) eine ringförmige Lichtquelle ist, die koaxial zur Achse A des Halses (5) des Hohlkörpers (3) ist.

11. Vorrichtung nach Anspruch 8, **dadurch gekennzeichnet, dass** die Lichtquelle (26) eine punktförmige Lichtquelle ist, die über der Bilderfassungsvorrichtung (29) positioniert ist und zu der sich über dem Stützring (7) des Halses (5) des Hohlkörpers (3) erstreckenden Nut (25) hin orientiert ist.

12. Vorrichtung nach einem der Ansprüche 8 bis 11, **dadurch gekennzeichnet, dass** die Bilderfassungsvorrichtung (29) zusammen mit dem Träger (28) des Hohlkörpers (3) beweglich ist.

13. Vorrichtung nach einem der Ansprüche 8 bis 11, **dadurch gekennzeichnet, dass** die Bilderfassungsvorrichtung (29) integral mit einem ortsfesten Gestell ausgebildet ist, wobei der Träger (28) des Hohlkörpers (3) in Bezug auf das Gestell beweglich ist.

## Claims

1. Method for detecting the angular orientation of hollow bodies (3) made of thermoplastic material, in particular preforms and/or containers, comprising a neck (5), of defined vertical main axis A, which is equipped with at least one marker (24), enabling its angular orientation to be determined, said neck (5) having at least one flange (7) and an annular groove (25) extending above said flange (7), the method comprising at least the following steps of:
- taking at least one image of the neck (5) of the hollow body (3) by means of an image capture device (29) from an imaging position and in an imaging axis that are both defined with respect to the hollow body (3);
- processing said at least one image in order to detect the angular position of the marker (24) relative to the imaging axis of the image capture device (29);
- the step of taking at least one image involving taking at least one image of the outer periphery of the neck (5) from an image capture device (26) positioned at the side of the hollow body (3), at the height of the neck (5) of said hollow body (3), such that the imaging axis of the image capture device (29) extends substantially perpendicularly to the main axis of the hollow body (3), each hollow body (3) having at least two distinct markings (24) positioned in the groove (25) extending above the flange (7) of the neck (5) of said hollow body (3), said markings (24) being positioned in the groove (25) such that at least one of the markings (24) is in the field of view of said image capture device (29), irrespective of the angular orientation of the hollow body (3);
the method **characterized in that** it comprises
- a step of processing the image taken by the image capture device (29), comprising at least one step of detecting the position of each lateral edge of the groove (25), a step of detecting the position of at least one marking (24) between the lateral edges of the groove (25) and a step of determining the angular position of the hollow body (3) as a function of the position of said marking (24) relative to the two lateral edges of the groove (25).

2. Method according to Claim 1, **characterized in that** the image of the outer periphery of the hollow body is taken such that the two lateral edges of the groove (25) extend above the flange (7) of the neck (5) of said hollow body (3).

3. Method according to Claim 1 or 2, **characterized in that** the hollow body (3) is transported along a defined path (12) relative to a fixed chassis, the image capture device (29) being fixed relative to said chassis and the images being taken during the passage of the hollow body (3) in at least one defined point of the path (12).

4. Method according to Claim 1 or 2, **characterized in that** the hollow body (3) is transported along a defined path (12) relative to a fixed chassis, the image capture device (29) being displaced jointly with the hollow body (3) during the transport thereof.

5. Method according to any one of Claims 1 to 4, **characterized in that** the markings (24) positioned in the groove (25) extending above the flange (7) of the neck (5) of said hollow body (3) are formed by alphanumeric characters and/or symbols and/or geometric images and/or pictograms and/or Unicode characters.

6. Method according to Claim 5, **characterized in that** the symbols are mathematical and/or monetary and/or typographical symbols.

7. Method according to any one of Claims 1 to 6, **characterized in that** the markings (24) are attached to the base of the groove (25) extending above the flange (7) of the neck (5) of said hollow body (3) by laser engraving or by mechanical engraving or by hot stamping or by moulding.

8. Device for implementing the method carried out according to any one of the preceding claims, comprising at least one support (28) which is designed to receive a hollow body (3) and which is movably mounted along a defined path (12), and an image capture device (29) which is arranged at the side of the hollow body (3), at the height of the neck (5) of the hollow body (3), such that the imaging axis of the image capture device (29) extends substantially perpendicularly to the main axis of the hollow body (3) and is coplanar with the annular groove (25) extending above the flange (7) of the neck (5) of said hollow body (3), device **characterized in that** it comprises means for processing images taken by the image capture device (29), including at least one algorithm for detecting the position of each lateral edge of the groove (25) extending above the flange (7) of the neck (5) of said hollow body (3), an algorithm for detecting the position of at least one marking (24) between the lateral edges of said groove (25) and an algorithm for determining the angular position of the hollow body (3) as a function of the position of said marking (24) relative to the two lateral edges of the groove (25).

9. Device according to Claim 8, **characterized in that** it comprises at least one lighting source (26) which is capable of illuminating all of the periphery of the neck (5) and/or all or part of the groove (25) extending above the flange (7) of the neck (5) of said hollow body (3).

10. Device according to Claim 8, **characterized in that** said lighting source (26) is an annular lighting source coaxial with the axis A of the neck (5) of the hollow body (3).

11. Device according to Claim 8, **characterized in that** said lighting source (26) is a localized lighting source which is positioned above the image capture device (29) and which is oriented toward the groove (25) extending above the flange (7) of the neck (5) of said hollow body (3).

12. Device according to any one of Claims 8 to 11, **characterized in that** the image capture device (29) is mobile jointly with the support (28) of the hollow body (3).

13. Device according to any one of Claims 8 to 11, **characterized in that** the image capture device (29) is integral with a fixed chassis, said support (28) of the hollow body (3) being mobile relative to said chassis.
